# EUROPEAN PATENT APPLICATION

(11) **EP 3 369 666 A1**
(43) Date of publication of application: **05.09.2018**
(21) Application number: 18157354.4
(22) Date of filing: 19.02.2018
(51) Int. Cl.: B65B 51/30, B65B 9/12

(54) **FORMING DEVICE FOR FORMING PACKS**

(30) Priority: 03.03.2017 EP 17159229
(71) Applicant: Tetra Laval Holdings & Finance S.A., 1009 Pully (CH)
(72) Inventor: CASELLI, Stefano, 41122 Modena (IT); PEDRETTI, Richard, John, 41043 Formigine (IT)
(74) Representative: Tetra Pak - Patent Attorneys SE

(57) **Abstract**

A forming device comprises a first chain conveyor (10) and a second chain conveyor (11) facing each other and arranged to interact with a tube (14) of packaging material to form and seal said tube (14) to obtain packs (2), said first chain conveyor (10) having a plurality of links meshing with at least a first wheel (16) mounted on a first shaft (40), said forming device further comprises a motor having a driving shaft directly connected to said first shaft (40), said forming device further comprises a gear wheel (63) mounted on said first shaft (40) and a removable crank (64) provided with a gear element (65) meshing with said gear wheel (63), said crank being selectively connectable to said first chain conveyor (10) so as to be alternatively arranged in an engaged configuration (E), in which said crank (64) is received in a corresponding seat (66) of said forming device and said gear element (65) is coupled to said gear wheel (63), and in a disengaged configuration (D), in which said crank (64) is extracted from said seat (66) and said gear element (65) is not coupled to said gear wheel (63) .

## Description

The present invention relates to a forming device for forming packs, in particular packs of pourable food products obtained from a tube of packaging material.

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by folding and sealing laminated strip packaging material. The packaging material has a multilayer structure comprising a base layer, e.g. of paper or mineral-filled polypropylene, and a number of layers of heat-seal plastic material, e.g. polyethylene film, covering both sides of the base layer.

In the case of aseptic packages for long-storage products, such as UHT milk, the packaging material also comprises a layer of oxygen-barrier material, e.g. an aluminium foil or ethylene vinyl alcohol (EVOH), which is superimposed on a layer of heat-seal plastic material, and is in turn covered with another layer of heat-seal plastic material forming the inner face of the package eventually contacting the food product.

As is known, packages of this sort are normally produced in fully automatic packaging machines, in which a continuous tube is formed from the web-fed packaging material. The web of packaging material is sterilized in the packaging machine, e.g. by applying a chemical sterilizing agent, such as a hydrogen peroxide solution, which, once sterilization is completed, is removed from the surfaces of the packaging material, e.g. evaporated by heating.

The sterilized web of packaging material is maintained in a closed, sterile environment, and is folded into a cylinder and sealed longitudinally to form a tube.

In particular, the packaging machine comprises a sealing unit in which a first longitudinal edge of the web of packaging material is superimposed to a second longitudinal edge, opposite to the first longitudinal edge, of the web of packaging material. The sealing unit comprises a sealing device that seals the first longitudinal edge to the second longitudinal edge to form a longitudinal seal of the tube.

The tube is fed in a vertical direction parallel to its axis, and is filled continuously with the sterilized or sterile-processed food product.

The packaging machine comprises a forming device that interacts with the tube to heat seal the tube, and cut the tube, at equally spaced cross sections and so form pillow packs.

The packs are then conveyed to a downstream folding device, where they are folded so as to generate corresponding packages.

The forming device comprises a first chain conveyor and a second chain conveyor defining respective endless paths and respectively fitted with a number of jaws and counter-jaws. The two paths comprise respective branches substantially facing and parallel to each other, and between which the tube of packaging material is fed. The jaws on one of the chain conveyors (for example the first chain conveyor), provided with respective heating elements, cooperate - along the above-mentioned branches of the respective paths - with corresponding counter-jaws on the other chain conveyor (for example the second chain conveyor), provided with respective pressure elements. In this way, the heating elements and the corresponding pressure elements grip the tube at a number of successive cross sections and so seal the packs.

The forming device also comprises a plurality of forming members. Each forming member comprises two forming half-shells, one of which is supported by a jaw and the other one of which is supported by the corresponding counter-jaw.

In particular, each of the forming half-shell is hinged to the corresponding jaw, or counter-jaw.

The two forming half-shells move cyclically between an open position, in which they are detached from the tube, and a closed position, in which they contact the tube and fold the portion of the tube between two consecutive sealing sections to define and control the volume of the pack being formed.

The first chain conveyor is looped around a couple of first toothed wheels, arranged at one end of the first chain conveyor, and a first guiding device, arranged at another end of the first chain conveyor, opposite to the above-mentioned end. In particular, the teeth of the first toothed wheels mesh with the links that form the first chain conveyor.

The first toothed wheels are mounted on a first shaft that is rotatatbly supported by a body of the forming unit.

Similarly, the second chain conveyor is looped around a couple of second toothed wheels, arranged at one end of the second chain conveyor, and a second guiding device, arranged at another end of the second chain conveyor, opposite to the above-mentioned end. In particular, the teeth of the second toothed wheels mesh with the links that form the second chain conveyor.

The second toothed wheels are mounted on a second shaft that is rotatatbly supported by a body of the forming unit.

A motor is connected to the first shaft and drives the first chain conveyor. The first chain conveyor is coupled, by means of a coupling device, to the second chain conveyor. In this way, when the motor drives the first chain conveyor by means of the first shaft, the first chain conveyor - in turn - drives the second chain conveyor by means of the coupling device.

The motor can be set in a working configuration, in which the motor drives the first shaft, and in a rest configuration in which the motor does not drive the first shaft. When the motor is in the rest configuration, the first chain conveyor (and the second chain conveyor coupled thereto) is idle.

When the motor is in the rest configuration, it might be necessary to drive the first chain conveyor (and the second chain conveyor coupled thereto) in order to carry out cleaning, settings, calibrations and other similar maintenance activities.

In particular, it might be necessary to drive the first chain conveyor (and the second chain conveyor coupled thereto) at a low speed and with high precision.

An object of the invention is to improve the forming devices for forming packs, in particular packs of pourable food products obtained from a tube of packaging material.

Another object of the invention is to provide a forming device provided with at least one chain conveyor that can be manually driven in a simple and reliable way, when the forming device is in a maintenance mode.

According to the invention, there is provided a forming device comprising a first chain conveyor and a second chain conveyor facing each other and arranged to interact with a tube of packaging material to form and seal said tube to obtain packs, said first chain conveyor having a plurality of links meshing with at least a first wheel mounted on a first shaft, said forming device further comprising a motor having a driving shaft directly connected to said first shaft, said forming device further comprising a gear wheel mounted on said first shaft and a removable crank provided with a gear element meshing with said gear wheel, said crank being selectively connectable to said first chain conveyor so as to be alternatively arranged in an engaged configuration, in which said crank is received in a corresponding seat of said forming device and said gear element is coupled to said gear wheel, and in a disengaged configuration, in which said crank is extracted from said seat and said gear element is not coupled to said gear wheel.

In particular, the crank is in the engaged configuration when the forming device is stopped and maintenance activities have to be carried out. On the contrary, the crank is in the disengaged configuration when the forming device is working and packs are being produced.

Owing to the invention, it is possible to manually drive the first chain conveyor in a very controlled way to carry out maintenance activities.

In particular, the crank - with the gear element - and the gear wheel form a driving arrangement that allows to manually drive the first chain conveyor in a very precise and reliable way.

Since the crank - with the gear element - is removed from the forming device when the forming device is running, it is possible to limit as much as possible the moving parts of the driving arrangement. In fact, the only component of the driving arrangement that is permanently mounted on the first shaft is the gear wheel. Thanks to the invention, therefore, it is possible to have accurate control of the first chain conveyor when the forming device is stopped and - at the same time - maximization of the mechanical efficiency when the forming device is working, such maximization being obtained by limiting the dissipation of energy connected with the weight of the moving parts.

In one embodiment, the gear element is a worm screw and the gear wheel is a worm wheel. The worm screw and the worm wheel cooperate to create an irreversible/self-locking kinematic.

In this case, the driving arrangement also works as a safety device. When the crank is in the engaged configuration, in fact, the mutual interaction of the worm screw and the worm wheel prevents the first chain conveyor from unintentionally moving, in particular from moving under the action of its own weight without an operator rotating the crank. In other words, when the crank is in the engaged configuration the first chain conveyor (and the second chain conveyor connected thereto) is not idle. In this way, the operator can perform maintenance activities on the first chain conveyor (and the second chain conveyor connected thereto) without the risk of being injured by unexpected self-movement of the first chain conveyor (and the second chain conveyor connected thereto).

A preferred, non-limiting embodiment of the present invention will be described by way of example with reference to the accompanying drawings, in which:
Figure 1 is a schematic view in perspective, with parts removed for clarity, of a packaging machine provided with a forming device for forming packs;
Figure 2 is a partially sectioned schematic side view of the machine of Figure 1, with parts removed for clarity;
Figure 3 is a partial cross section of the forming device showing a crank of the forming device in an engaged configuration;
Figure 4 is a partial cross section of the forming device without the crank, i.e. showing the forming device when the crank (not shown) is in a disengaged configuration;
Figure 5 is an interrupted perspective view of the forming device showing the crank in the disengaged configuration.

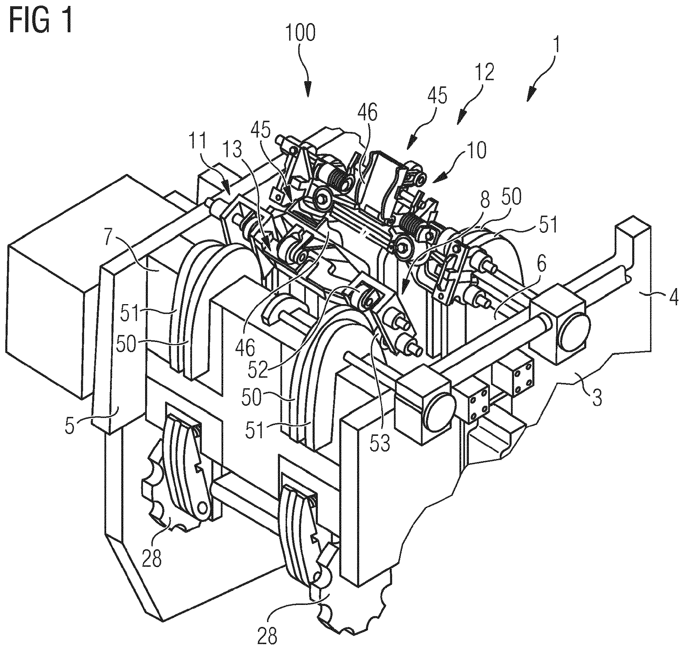

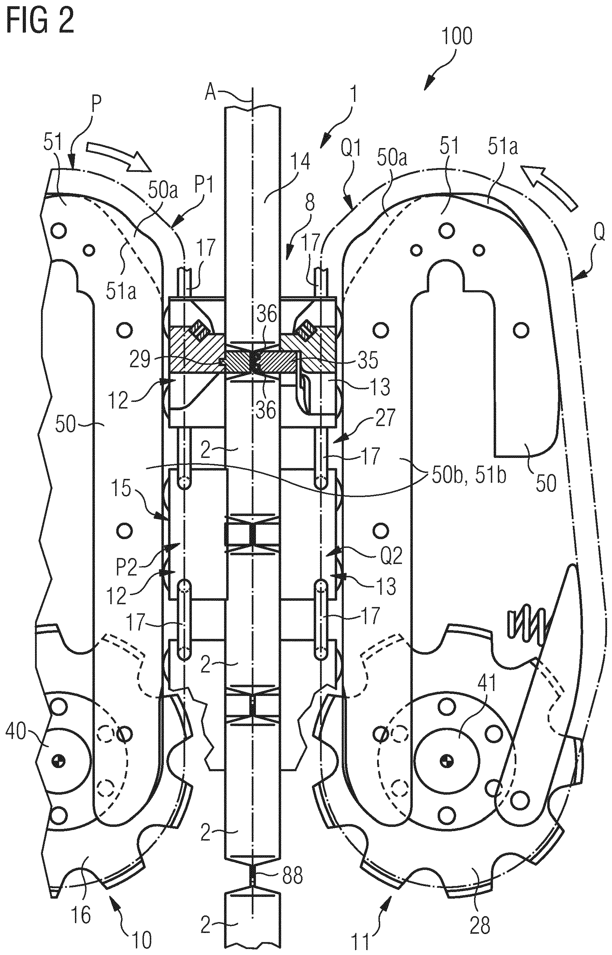

Figures 1 and 2 show a packaging machine 1 for producing, from a tube 14 of packaging material, sealed packs 2 containing a pourable food product, such as pasteurized or UHT milk, fruit juice, wine, etc.

The tube 14 has a longitudinal axis A and is formed in known manner by longitudinally folding and sealing a web of packaging material, and is filled upstream with the sterilized or sterile-processed food product.

In particular, the tube 14 is obtained by superimposing a first longitudinal edge of the packaging material on a second longitudinal edge of the packaging material and by sealing the first longitudinal edge to the second longitudinal edge by means of a sealing device (not shown) to obtain a longitudinal seal.

The packaging machine 1 comprises a forming device 100 having a frame 3 (Figure 1) defined by a first side wall 4 and a second side wall 5 and by a first transverse wall 6 and a second transverse wall 7 fitted rigidly between the first side wall 4 and the second 5 side wall and defining, with the first side wall and the second side wall 5, an opening 8.

The forming unit 100 further comprises a first chain conveyor 10 and a second chain conveyor 11.

The first chain conveyor 10 and the second chain conveyor 11 face each other and are arranged on opposite sides of the tube 14.

The first chain conveyor 10 and the second chain conveyor 11 are fitted to the frame 3 and respectively comprise jaws 12 (only one shown in Figure 1) and counter-jaws 13 (only one shown in Figure 1) cooperating with each other to interact with the tube 14, which is fed along a vertical path through the opening 8.

In practice, each jaw 12 and the corresponding counter-jaw 13 are cyclically movable between a gripping position, in which they grip a cross section of the tube 14, and a release position, in which they are released from the tube 14.

The first chain conveyor 10 and the second chain conveyor 11 define, respectively, a first endless path P and a second endless path Q along which the jaws 12 and the counter-jaws 13 are fed, and which respectively extend about the first wall 6 and the second wall 7.

The first chain conveyor 10 comprises a first chain 15 extending along the first endless path P, and two first wheels 16, or first sprockets, (only one shown in Figure 2) meshing with opposite sides of the first chain 15 at the bottom end of the first endless path P.

The first wheels 16 are mounted on a first shaft 40.

The jaws 12 are an integral part of, and define, links of the first chain 15, and are connected to each other in articulated manner by pairs of link rods 17.

Similarly, the second chain conveyor 11 comprises a second chain 27 extending along the second endless path Q, and two second wheels 28, or second sprockets, meshing with opposite sides of the second chain 27 at the bottom end of the second endless path Q.

The second wheels 28 are mounted on a second shaft 41.

The counter-jaws 13 are an integral part of, and define, links of second chain 27, and are connected to each other in articulated manner by pairs of link rods 17.

Each jaw 12 comprises a sealing element 29, such as an induction heating element.

In particular, the sealing element 29 is fitted to a main body of the jaw 12 and is arranged along a direction perpendicular to the axis A. The sealing element 29 comprises a pair of straight, parallel and electrically conductive active surfaces, which are electrically supplied by a power generator.

Each counter-jaw 13 comprises a pressure element 35 (Figure 2), which cooperates with the sealing element 29 of the corresponding jaw 12 to grip a cross section of the tube 14. On a front surface facing, in use, the corresponding jaw 12, the pressure element 35 comprises two bands 36 of deformable material, for example elastomeric material, which cooperate with the packaging material in opposition to the active surfaces of sealing element 29.

The movement of the jaws 12 and the counter-jaws 13 is controlled by respective pairs of cams 50, 51 fitted to the first transversal wall 6 and the second transversal wall 7 of the frame 3 and cooperating with respective pairs of rollers 52, 53 rotatably supported by the jaws 12 and the counter-jaws 13.

The first transverse wall 6 (Figure 1) is fitted with two pairs of cams 50, 51 which cooperate with respective pairs of rollers 52, 53 of the jaws 12.

Similarly, the second transverse wall 7 is fitted with two pairs of cams 50, 51 which cooperate with respective pairs of rollers 52, 53 of the counter-jaws 13.

The cams 50, 51 comprise respective substantially U-shaped portions 50a, 51a, extending about the top edge of the first transverse wall 6 and the second transverse wall 7 to define, for the first chain 15 and the second chain 27, a transmission opposite the first wheels 16 and the second wheels 28.

The cams 50, 51 also comprise respective portions 50b, 51b extending along the first transverse wall 6 and the second transverse wall 7, inside opening 8.

The portions 50a, 51a define respective path portions P1, Q1 along which the jaws 12 and the counter-jaws 13, starting from the release position, approach and contact the tube 14.

The portions 50b, 51b also define respective path portions P2, Q2 along which the jaws 12 and the counter-jaws 13 are maintained in their gripping position, in which the jaws 12 and the counter-jaw 13 press the tube 14 to form the seals defining the packs 2.

Each of the jaws 12 and the counter-jaws 13 comprises a forming member 45 for controlling the volume of the packs 2 being formed.

The forming member 45 associated to a jaw 12 and the forming member 45 associated to the corresponding counter-jaw 13 are arranged on opposite sides of the tube 14 and faces each other.

Each forming member 45 comprises a respective forming half-shell 46 that has a wall arrangement comprising a main wall and a pair of sidewalls protruding from the main wall.

The forming half-shells 46 are movable between an open position, in which they do not interact with the tube 14, and a closed position, in which they mutually cooperate to delimit a space defining the shape and the volume of the packs 2 being formed between the forming half-shells 46.

The forming device 100 further comprises a coupling arrangement 60 comprising a plurality of first elements 61 and a plurality of second elements 62, the first elements 61 being shape-couplable with the second elements 62.

Each first element 61 is fixed to a corresponding link of the first chain 15.

Each second element 62 is fixed to a corresponding link of the second chain 27.

The forming device 100 further comprises a motor, in particular an electrical motor (not shown), having a shaft directly coupled to the first shaft 40. In particular, the shaft of the motor is connected to the first shaft 40 without interposition of any gearbox.

The motor rotates the first shaft 40 and, therefore, drives the first chain conveyor 10. The first chain conveyor 10, in turn, drives the second chain conveyor 11 through the coupling arrangement 60, owing to the mutual interaction of the first elements 61 and the second elements 62.

The forming device 100 further comprises a gear wheel 63 mounted on the first shaft 41. In particular the gear wheel 63 is fixed to an end of the first shaft 40 opposite to another end of the first shaft 40 that is connected to the shaft of the motor.

The forming device 100 further comprises a crank 64 provided with a gear element 65 meshing with the gear wheel 63.

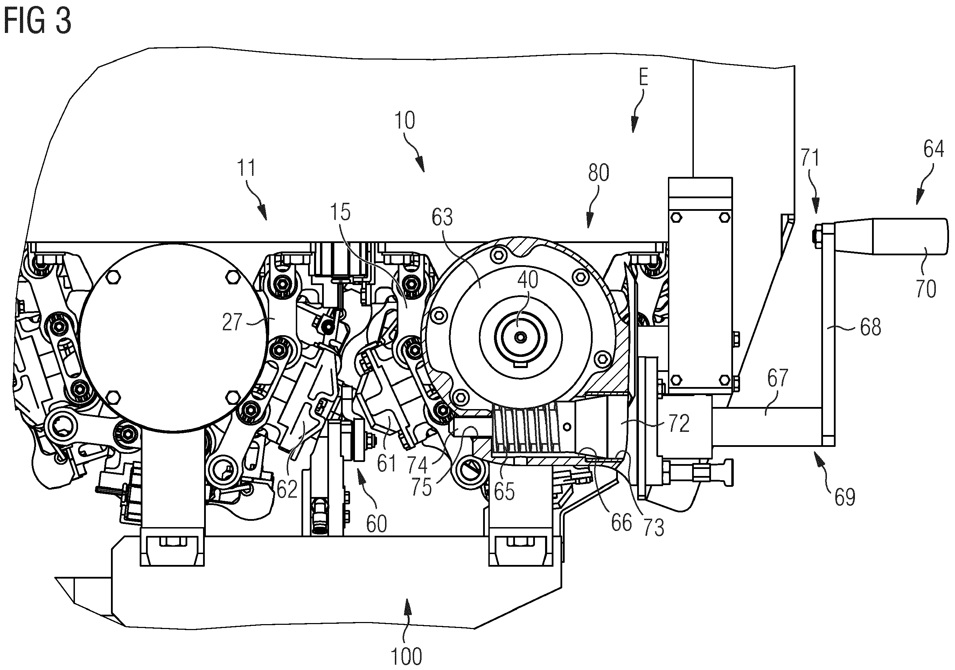

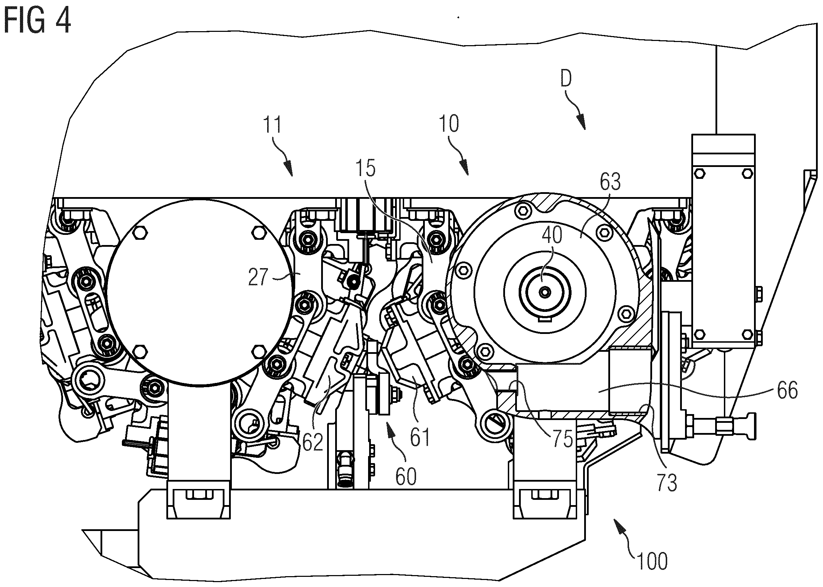

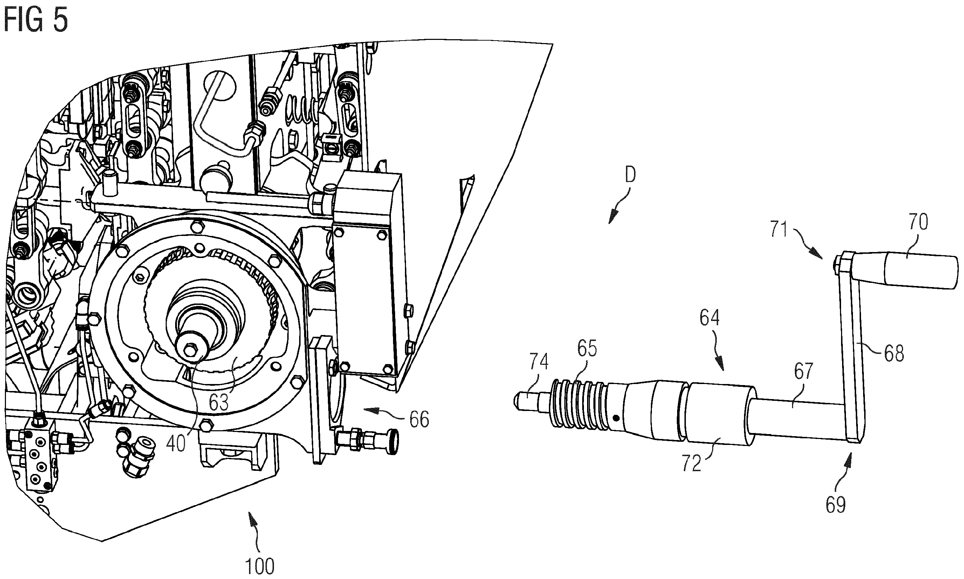

The crank 64 is selectively connectable to the first chain conveyor 10 so as to be alternatively arranged in an engaged configuration E (shown in Figure 3), in which the crank 64 is received in a seat 66 of said forming device 100 and the gear element 65 is coupled to the gear wheel 63, and a disengaged configuration D (shown in Figures 4 and 5), in which the crank 64 is extracted from the seat 66 and the gear element 65 is not coupled to the gear wheel 63.

The crank 64 comprises a shaft element 67 on which the gear element 65 is coaxially mounted.

The crank 64 further comprises a bar 68. The shaft element 67 is connected to an end portion 69 of the bar 68. In particular, shaft element 67 extends perpendicularly from the bar 68.

The crank 64 further comprises a handle 70 connected to a further end portion 71 of the bar 68, opposite to the end portion 69. In particular, the handle 70 extends perpendicularly from bar 68. The handle 70 is, therefore, parallel to the shaft element 67.

The shaft element 67 comprises a first guide element 72 cooperating with a first guide portion 73 of the seat 66 and a second guide element 74 cooperating with a second guide portion 75 of the seat 66.

The first guide element 72 comprises a first cylindrical body coaxial with the shaft element 67.

The second guide element 74 comprises a second cylindrical body coaxial with the shaft element 67.

The first guide portion 73 comprises a first cylindrical part of the seat 66 arranged to receive the above-mentioned first cylindrical body.

The second guide portion 75 comprises a second cylindrical part of the seat 66 arranged to receive the above-mentioned second cylindrical body.

The first cylindrical body has a first diameter and the second cylindrical body has a second diameter, the second diameter being smaller than the first diameter.

The first guide element 72 is closer to the bar 68 than the second guide element 74.

The forming device 100 further comprises a releasable locking device (not shown) that may be arranged in a locking position, in which the crank 64 is maintained in the engaged configuration E, and in an unlocking position, in which the crank 64 can be moved from the engaged configuration E to the disengaged configuration D, and vice-versa.

In one embodiment, the gear element 65 is a worm screw and the gear wheel 63 is a worm wheel. In this case, the worm screw and the worm wheel define an irreversible/self-locking kinematic.

The gear wheel 63 and the gear element 65 actuated by the crank 64 form a driving arrangement 80 that allows to manually drive the first chain conveyor 10 in a very precise and reliable way for maintenance purposes, as it will be better explained herebelow.

During a working phase of the packaging machine 1, the first chain conveyor 10 and the second chain conveyor 11 are rotated in opposite directions, as indicated by the arrows in Figure 2, so that, from the end of the path portions P1, Q1 of respective paths P, Q and along the path portions P2, Q2, each jaw 12 and the corresponding counter-jaw 13 cooperate with the tube 14 according to a movement defined by the profiles of cams 50, 51.

After a first stage in which tube 14 is contacted and gradually compressed, and the packaging material is folded locally to form a flat sealing strip 88 extending crosswise to the tube 14, the jaw 12 and the corresponding counter-jaw 13 reach, respectively, portions 50b, 51b (Figure 2) where the maximum gripping pressure is applied to the tube 14 and the sealing element 29 cooperates with the pressure element to transversally seal the tube 14 at the sealing strip 88.

At the same time, the forming half-shells 46 move towards the tube 14 form the open position to the closed position.

Once the forming half-shells 46 are closed about the tube 14 and the sealing element 29 is activated, the forming half-shells 46 control the volume and the shape of the pack 2 being formed as the tube 14 is transversally heat-sealed.

Once sealing has been completed, a cutting member (not shown) is actuated, so as to cut the tube 14 along the sealing strip 88 to separate the formed pack 2 from the remaining part of the tube 14.

In an embodiment, the cutting member can be part of a cutting device arranged downstream of the forming device 100.

At this stage, the forming half-shells 21 move away from the tube 2, for example under the action of springs, until they reach the open position.

During the working phase of the packaging machine 1, the crank 64 is kept in the disengaged configuration D.

During a rest phase of the packaging machine 1, there might be the need to manually drive the first chain conveyor 10 and the second chain conveyor.

In this case, the crank 64 is set in the engaged configuration E.

When the crank 64 is in the engaged configuration E, an operator may rotate the shaft element 67 by means of the handle 70. The gear element 65 meshes with the gear wheel 63 and so drives the chain conveyor 10, which - in turn - drives the second chain conveyor 11.

Owing to the invention, during the rest phase of the packaging machine 1 the first chain conveyor 10 can be driven in a precise way to carry out maintenance activities.

In particular, the driving arrangement 80 formed by the wheel element 63 and the gear element 65 of the crank 64 allows to manually control the first chain conveyor 10.

In addition, since the gear wheel 63 is the only component of the driving arrangement 80 that is permanently mounted on the first shaft 40, the efficiency of the forming device 100 is very high. The number of moving part of the driving arrangement 80 that dissipate energy during the working phase of the packaging machine 100, is - in fact - kept to a minimum while, at the same time, the driving arrangement 80 assures an extremely effective control of the first chain conveyor 10 (and of the second chain conveyor 11 connected thereto), during the rest phase of the packaging machine 1.

In addition, when the gear element 65 is a worm screw and the gear wheel 63 is a worm wheel it is possible to obtain a very safe forming device 100.

In this case, in fact, when the crank 64 is in the engaged configuration E, the worm screw and the worm wheel define an irreversible and self-locking kinematic that maintains the first chain conveyor 10 (and the second chain conveyor 11 connected thereto) in a steady position. Since the first chain conveyor 10 (and the second chain conveyor 11 connected thereto) is kept still, the risk that an operator servicing the machine can get injured by an accidental unexpected movement of the first chain conveyor 10 (and the second chain conveyor 11 connected thereto) is highly reduced.

Clearly, changes may be made to the forming device as described and illustrated herein without, however, departing from the scope defined in the accompanying claims.

## Claims

1. Forming device, comprising a first chain conveyor (10) and a second chain conveyor (11) facing each other and arranged to interact with a tube (14) of packaging material to form and seal said tube (14) to obtain packs (2), said first chain conveyor (10) having a plurality of links meshing with at least a first wheel (16) mounted on a first shaft (40), said forming device further comprising a motor having a driving shaft directly connected to said first shaft (40), said forming device further comprising a gear wheel (63) mounted on said first shaft (40) and a removable crank (64) provided with a gear element (65) meshing with said gear wheel (63), said crank being selectively connectable to said first chain conveyor (10) so as to be alternatively arranged in an engaged configuration (E), in which said crank (64) is received in a corresponding seat (66) of said forming device and said gear element (65) is coupled to said gear wheel (63), and in a disengaged configuration (D), in which said crank (64) is extracted from said seat (66) and said gear element (65) is not coupled to said gear wheel (63).

2. Forming device according to claim 1, wherein said gear wheel (63) is fixed to an end of said first shaft (40) opposite to another end of said first shaft (40) that is connected to said driving shaft of said motor.

3. Forming device according to claim 1, or 2, wherein said driving shaft of said motor is connected to said first shaft (40) without interposition of any gearbox.

4. Forming device according to any one of the preceding claims, wherein said crank (64) comprises a shaft element (67) on which said gear element (65) is coaxially mounted.

5. Forming device according to claim 4, wherein said shaft element (67) comprises a first guide element (72) arranged to cooperate with a first guide portion (73) of said seat (66) and a second guide element (74) arranged to cooperate with a second guide portion (75) of said seat (66).

6. Forming device according to claim 5, wherein said first guide element (72) comprises a first cylindrical body coaxial with said shaft element (67) and said second guide element (74) comprises a second cylindrical body coaxial with said shaft element (67).

7. Forming device according to claim 6, wherein said first guide portion (73) comprises a first cylindrical part of said seat (66) arranged to receive said cylindrical body and said second guide portion (75) comprises a second cylindrical part of said seat (66) arranged to receive said second cylindrical body.

8. Forming device according to claims 6, or 7, wherein said first cylindrical body has a first diameter and said second cylindrical body has a second diameter, said second diameter being smaller than said first diameter.

9. Forming device according to any one of claims 4 to 8, wherein said crank (64) further comprises a bar (68) and a handle (70), said shaft element (67) extending from an end portion (69) of said bar (68) and said handle (7) extending from a further end portion (71) of said bar (68), opposite to said end portion (69).

10. Forming device according to any one of the preceding claims, and further comprising a releasable locking device movable between a locking position, in which said crank (64) is maintained in said engaged configuration (E), and an unlocking position, in which said crank (64) can be moved from said engaged configuration (E) to said disengaged configuration (D), and vice-versa.

11. Forming device according to any one of the preceding claims, and further comprising a coupling arrangement (60) through which said first chain conveyor (10) drives said second chain conveyor (11).

12. Forming device according to claim 11, wherein said coupling arrangement (60) comprises a plurality of first elements (61) and a plurality of second elements (62), said first elements (61) being shape-couplable with said second elements (62), each of said first elements (61) being fixed to a link of said first chain conveyor (10) and each of said second elements (62) being fixed to a corresponding link of said second chain conveyor (11).

13. Forming device according to any one of the preceding claims, wherein said gear element (65) is a worm screw and said gear wheel (63) is a worm wheel.

14. Forming device according to claim 13, wherein said worm screw and said worm wheel define an irreversible/self-locking kinematic.
